# EUROPEAN PATENT SPECIFICATION

(11) **EP 1 317 086 B1**
(45) Date of publication and mention of the grant of the patent: **12.09.2007**
(21) Application number: 02751780.4
(22) Date of filing: 29.07.2002
(51) Int. Cl.: H04J 11/00

(54) **DATA TRANSMISSION APPARATUS AND DATA TRANSMISSION METHOD**
VERFAHREN UND VORRICHTUNG ZUR DATENÜBERTRAGUNG
APPAREIL ET PROCEDE DE TRANSMISSION DE DONNEES

(30) Priority: 31.07.2001 JP 2001232928
(43) Date of publication of application: 04.06.2003
(73) Proprietor: MATSUSHITA ELECTRIC INDUSTRIAL CO., LTD, Kadoma-shi, Osaka 571-8501 (JP)
(72) Inventor: UESUGI, Mitsuru, Yokosuka-shi, Kanagawa 238-0048 (JP); INOGAI, Kazunori, Yokohama-shi, Kanagawa 236-0032 (JP); SUMASU, Atsushi, Yokosuka-shi, Kanagawa 238-0013 (JP)
(74) Representative: Grünecker, Kinkeldey, Stockmair & Schwanhäusser Anwaltssozietät
(86) International application number: PCT/JP2002/007707
(87) International publication number: WO 2003/013038

(56) References cited:
- JP-A- 2000 286 823
- JP-A- 2000 332 724
- US-B1- 6 870 826
- ATSUSHI SUMASU ET AL.: 'Jikan shuhasu ryoiki doji kakusan o mochiita OFDM-CDMA' THE INSTITUTE OF ELECTRONICS, INFORMATION AND COMMUNICATION ENGINEERS GIJUTSU KENKYU HOKOKU vol. 100, no. 21, 21 April 2000, pages 13 - 18, XP002961707
- TEICH W.G. ET AL.: 'Iterative detection algorithms for extended MC-CDMA' INTERNATIONAL SYMOSIUM ON IEEE PROCEEDINGS vol. 1, 02 September 1998, pages 184 - 188, XP010307766

## Description

### Technical Field

The present invention relates to data transmission apparatus and data transmission method.

### Background Art

Recently, a technique/method for transmission of high-speed data of different types such as image, voice, etc. in fields such as mobile communication or digital broadcasting etc. is considered extensively. Thus, the OFDM (Orthogonal Frequency Division Multiplexing) method and CDMA (Code Division Multiple Access) method which are combined together to perform OFDM-CDMA method recently attracts attention in the mobile communication field because of strong reason in frequency selective fading. The OFDM method is one measuring technique of frequency selective fading, further, it is one kind of multicarrier modulation method to achieve mutual orthogonality between a plurality of subcarriers (carrier waves), and there is a high-order modulation method which has the most frequency utilization efficiency among multicarrier modulation methods. In addition, the CDMA method similarly is one measuring technique of frequency selective fading, it is one kind of spectrum spreading communication method in which a signal is spread by spreading code, and it is a method in which a high resistance of interference is acquired by the spreading gain.

In such an OFDM-CDMA method, recently, executing a two-dimensional spreading of frequency axis direction and time axis direction in OFDM is proposed. Thus, when two-dimensional spreading is carried out in OFDM, the most suitable performance can be obtained by optimizing spreading factor of frequency axis direction and time axis direction based on channel situation.

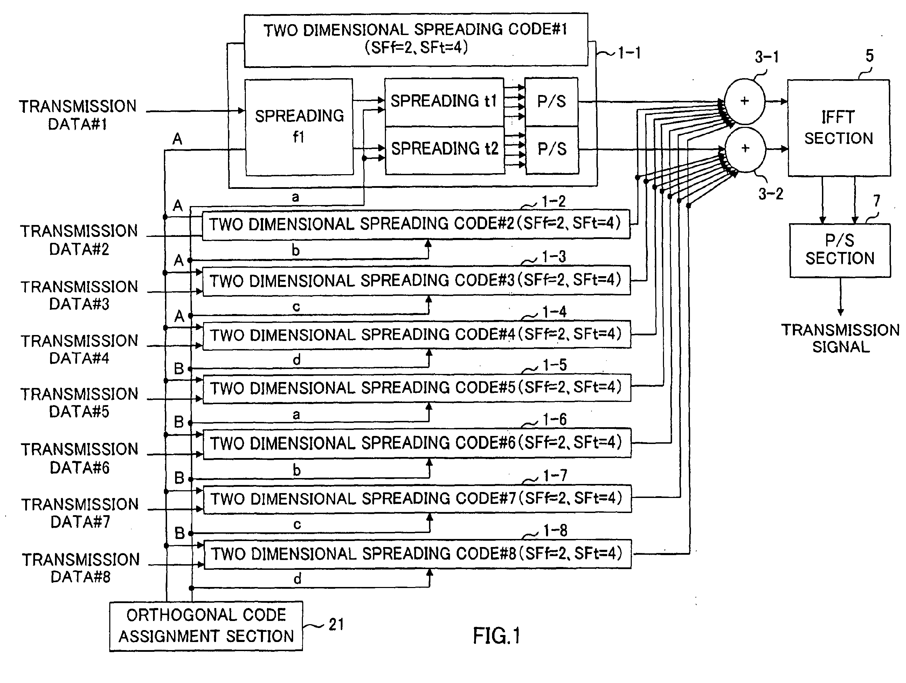

FIG. 1 is a block diagram showing an exemplary configuration example of a data transmission apparatus and OFDM-CDMA method.

Such a data transmission apparatus comprising a plurality of two-dimensional spreading sections 1-1 to 1-8 to perform a two-dimensional spreading on the transmission data #1 to #8, a plurality of multiplexers (here two) 3-1 and 3-2 to multiplex the signal after being subjected to two-dimensional spreading, two point of Inverse Fast Frequency Transform (IFFT) section 5 to perform IFFT on the multiplexed signal outputted from each multiplexer, 3-1 and 3-2, and parallel to serial (P/S) converter 7 which outputs the transmission signal after converting the parallel signal of two sequences outputted from IFFT section into a serial signal.

The two-dimensional spreading codes #1 to #8 which are used when the transmission data #1 to #8 are subjected to two-dimensional spreading in two-dimensional spreading sections 1-1 to 1-8 are obtained from orthogonal code assignment section 21. Here, the orthogonal codes of the same Spreading Factors (SF) are assigned for all transmission data #1 to #8 and each is multiplexed after being subjected to two-dimensional spreading. For example, let the spreading factor of the frequency axis direction be SFf and spreading factor of the time axis direction be SFt, in the example shown in FIG. 1, each of the transmission data #1 to #8 is spread 8 times per one symbol, that is, spread twice (SFf=2) in frequency axis direction, and spread 4 times (SFt=4) in time axis direction. At that time, all signals after two-dimensional spreading become orthogonal to each other. In this case, the spreading factor of the frequency axis direction (SFf) and spreading factor of the time axis direction (SFt) are of the same orthogonality state for all transmission data.

However, in the apparatus described above, when two-dimensional spreading is carried out in OFDM, although normal orthogonal code is used in executing spreading, there is a difficult problem to maintain the orthogonality between codes after performing multiplexing of signals of different spreading factors.

In other words, when two-dimensional spreading is carried out in OFDM, there is a difficult problem to maintain orthogonality between codes because there is a premise condition that both frequency axis direction and time axis direction are of similar spreading factor in the orthogonal signal after being multiplexed and subjected to a plurality of spreading even when a normal orthogonal code is used to carry out spreading under the condition that both/either of frequency axis direction and/or time axis direction of signals of different spreading factors are multiplexed. As the optimum value of spreading factor of frequency axis direction or spreading factor of time axis direction is different due to channel, the optimum value of each user is different because the channel of each user is different. In CDMA, because orthogonality of codes has large influence on the capacity, it is impossible to maintain the orthogonality of codes as the frequency axis direction and time-axis direction are not of the same spreading factor as described in the aforementioned apparatus even if orthogonality between codes is preserved when using different spreading factors among users.

US 6,870,826 discloses the art of arranging spreading signals of the transmission data sequence in two dimensions on a frequency axis and time axis in a multi-carrier transmission system adopting an OFDM/CDMA modulation scheme, in order to counteract the effect of frequency-selective fading. The disclosure of this document corresponds to that of JP 2000 - 332724.

### Disclosure of Invention

It is an object of the present invention to provide data transmission apparatus and data transmission method that can maintain orthogonality of codes even when spreading factors are different at the time of carrying out two-dimensional spreading of frequency axis direction
and time axis direction, in addition, it is possible to optimize spreading factors of frequency axis direction and time axis direction of each code while maintaining orthogonality of codes.

This object is solved by the invention as claimed in the independent claims. Preferred embodiments of the invention are defined by the dependent claims.

### Brief Description of Drawings

FIG. 1 is a block diagram showing a configuration of a data transmission apparatus;
FIG. 2 is a block diagram showing a configuration of a data transmission apparatus according to one embodiment of the present invention;
FIG. 3 shows a chip allocation diagram of assignment example 1;
FIG. 4 is a diagram showing an example of a code pattern of assignment example 1;
FIG. 5 shows a chip allocation diagram of assignment example 2;
FIG. 6 is a diagram showing an example of a code pattern of assignment example 2;
FIG. 7 shows a chip allocation diagram of assignment example 3;
FIG. 8 is a diagram showing an example of a code pattern of assignment example 3;
FIG. 9 shows a chip allocation diagram of assignment example 4;
FIG. 10 is a diagram showing an example of a code pattern of assignment example 4;
FIG. 11 shows a chip allocation diagram of assignment example 5;
FIG. 12 is a diagram showing an example of a code pattern of assignment example 5.

### Best Mode for Carrying out the Invention

Hereafter, embodiments of the present invention will be specifically described with reference to the accompanying drawings.

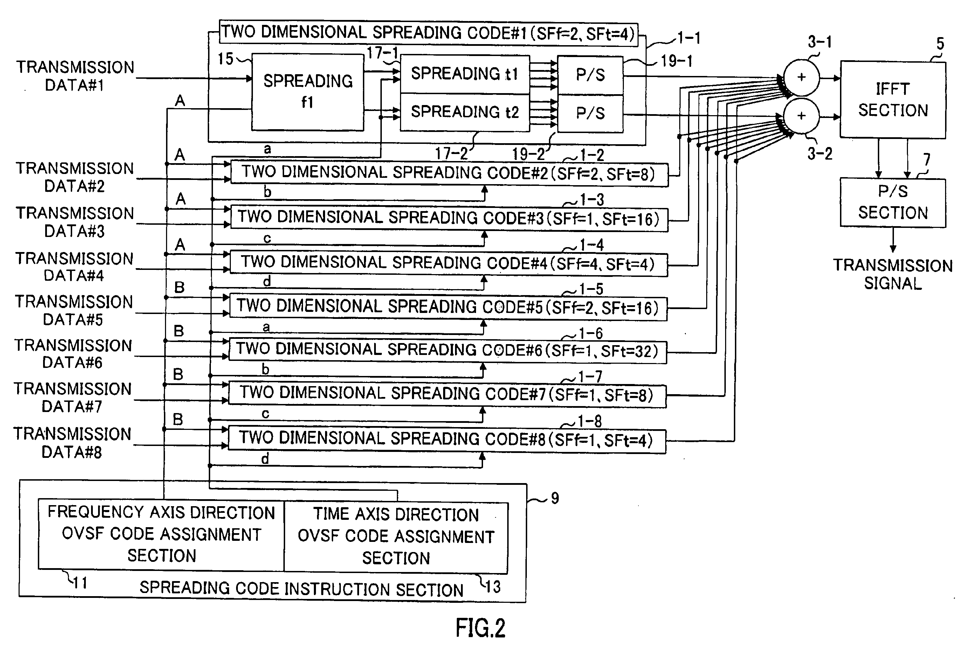

FIG. 2 is a block diagram showing a configuration of a data transmission apparatus according to one embodiment of the present invention. The data transmission apparatus shown in FIG. 2 is a data transmission apparatus of an OFDM-CDMA method, such data transmission apparatus comprising a plurality of two-dimensional spreading sections 1-1 to 1-8 to perform two-dimensional spreading on the transmission data #1 to #8, a plurality of multiplexers (here two) 3-1 and 3-2 to multiplex the signal after being subjected to two-dimensional spreading, two point of Inverse Fast Frequency Transform (IFFT) section 5 to perform IFFT on the multiplexed signal outputted from each multiplexer, 3-1 and 3-2, and parallel to serial (P/S) converter 7 which outputs the transmission signal after converting the parallel signal of two sequences outputted from IFFT section into a serial signal.

The spreading codes which are used when the transmission data #1 to #8 is subjected to two-dimensional spreading in two-dimensional spreading sections 1-1 to 1-8 are obtained from spreading code instruction section 9. Spreading code instruction section 9 comprises basically, Orthogonal Variable Spreading Factor (OVSF), that is, frequency axis direction OVSF code assignment section 11 which generates a spreading code for frequency axis direction (first spreading code) and assigns the result to each two-dimensional spreading sections 1-1 to 1-8, and, time axis direction OVSF code assignment section 13 which generates a spreading code for time axis direction (second spreading code) and assigns the result to each of two-dimensional spreading sections 1-1 to 1-8. Here, OVSF code is a spreading code used in CDMA, that is to say, spreading codes are mutually orthogonal (orthogonal codes) even if there are different spreading factors. A code (OVSF code) that satisfies the one-dimensional orthogonal variable spreading factor (OVSF) is already known and is used in Wideband-Code Division Multiple Access (W-CDMA) method which is a technology that multiplexes the codes of different spreading factors to keep the orthogonality. OVSF code can be derived using the coding tree. In particular, by combining of, for instance, an orthogonal code of a fixed spreading factor and another orthogonal code obtained from reversing the polarity of the orthogonal code, an orthogonal code of spreading factor which is larger than said spreading factor is generated. At that time, the code allocated under the same sequence is orthogonal regardless to layer (when the layer is lowered by 1, the spreading code becomes double in length). Thus, orthogonal variable spreading factor (OVSF) codes of one dimension are extended into two dimensions.

Specifically, the transmission data is first spread by an OVSF code of one-dimension in the frequency axis direction (obtained from frequency axis direction OVSF code assignment section 11), and the result is spread by an OVSF code of one-dimension in the time axis direction (obtained from time axis direction OVSF code assignment section 13, which is selected independent of frequency axis direction) in each of two-dimensional spreading sections 1-1 to 1-8. Thus, transmission data is spread by a two-dimensional orthogonal spreading code of spreading factor SFf × SFt (hereinafter, it is simply referred to as "two-dimensional spreading code"). It is to say that this two-dimensional spreading code is an OVSF code extended into 2 dimensions. As described above, SFf is the spreading factor of frequency axis direction, and SFt is the spreading factor of time axis direction. The values of SFt and SFf might be mutually different.

For example, the two-dimensional spreading code #1, as shown in the example of FIG. 2, is obtained in two-dimensional spreading section 1-1. The two-dimensional spreading code #1 is SFf=2 and SFt=4, and the total spreading factor (=SFf × SFt) is (= 2 × 4).

Accordingly, with respect to transmission data #1 inputted in two-dimensional spreading section 1-1, first, the transmission data #1 is double spread (spread f1) in frequency axis direction by OVSF code of SFf=2 in frequency axis direction spreading section 15 which is inside two-dimensional spreading section 1-1, in addition, each chip after frequency axis direction spreading is 4 times spread (spread t1, spread t2) in time axis direction by OVSF code of SFt=4 in two time axis direction sections 17-1 and 17-2 which are corresponding to each chip after frequency axis direction spreading. The parallel signal outputted from each time axis direction spreading sections 17-1 and 17-2 is outputted to multiplexers 3-1 and 3-2 after being converted into serial signals in parallel to serial (P/S) converters 19-1 and 19-2 set according to each time axis direction spreading section 17-1 and 17-2.

Moreover, each of the two-dimensional spreading codes #2 to #8 of different spreading factors are obtained in two-dimensional spreading sections 1-2 to 1-8, as shown in the example of FIG. 2. For example, two-dimensional spreading code #2 obtained from two-dimensional spreading section 1-2 is SFf=2, SFt=8, and the total spreading factor is 16, two-dimensional spreading code #3 obtained from two-dimensional spreading section 1-3 is SFf=1, SFt=16, and the total spreading factor is 16, two-dimensional spreading code #4 obtained from two-dimensional spreading section 1-4 is SFf=4, SFt=4, and the total spreading factor is 16, two-dimensional spreading code #5 obtained from two-dimensional spreading section 1-5 is SFf=2, SFt=16, and the total spreading factor is 32, two-dimensional spreading code #6 obtained from two-dimensional spreading section 1-6 is SFf=1, SFt=32, and the total spreading factor is 32, two-dimensional spreading code #7 obtained from two-dimensional spreading section 1-7 is SFf=1, SFt=8, and the total spreading factor is 8, two-dimensional spreading code #8 obtained from two-dimensional spreading section 1-8 is SFf=1, SFt=4, and the total spreading factor is 4.

In addition, although spreading in time axis direction is made after spreading in frequency axis direction according to the present embodiment, the invention is not limited to this. The order of spreading of frequency axis direction and spreading of time axis direction might be reversed.

Moreover, although different spreading factors are used in each two-dimensional spreading section 1-1 to 1-8 according to the present embodiment, the invention is not limited to this and, of course, same spreading factors can be used.

Furthermore, although the case when multiplexing 8 transmission data #1 to #8 is explained as an example according to the present embodiment, of course, the multiplexing number of transmission data is not limited to this number.

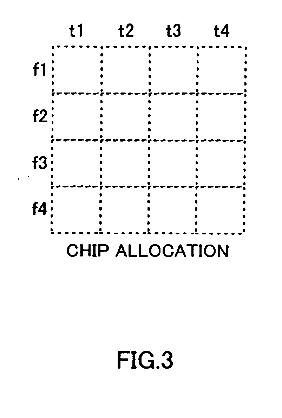

Next, assignment of two-dimensional spreading codes will be explained specifically with reference to FIG. 3 to FIG. 12.

### (Assignment Example 1)

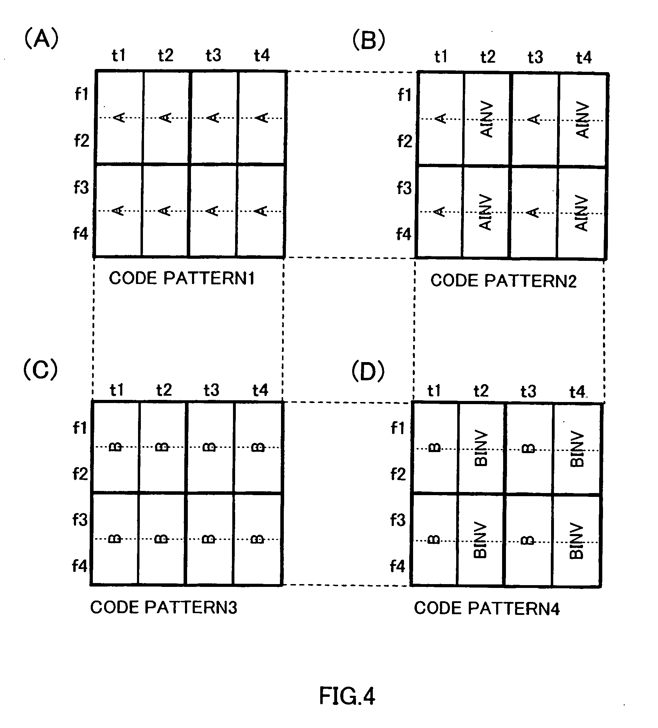

First, assignment example 1 is the case of assigning two-dimensional spreading code in which the spreading factors of frequency axis direction are the same for all transmission data and spreading factors of time axis direction are also the same for all transmission data. Here, four code patterns 1 to 4 shown in FIG. 4 are formed as a chip allocation diagram shown in FIG. 3 (4 chips in frequency axis, and 4 chips in time axis).

FIG. 4 is an example of total spreading factor=4, and it is an example of allocating two symbols one by one to each of two-dimensional spreading codes and which used four kinds of two-dimensional spreading code of SFf=2 and SFt=2 in a total of 8 chips, frequency axis direction 4 chips and time axis direction 2 chips. Here, the orthogonal codes A and B of two chips which are mutually orthogonal with spreading code of double of the spreading code of frequency axis direction are considered as basic codes. Both, A which is repeated two times chip code (hereinafter, it is shown as "A+A"), or A and A which is an inverse code (hereinafter, it is shown as "AINV") are codes of 4 arranged chips (hereinafter, it is shown as "A+AINV) is a special code which is mutually orthogonal, both/each are orthogonal to B which is repeated two times chip code (hereinafter, it is shown as "B+B"), or B and B which is an inverse code (hereinafter, it is shown as "BINV") are codes of 4 arranged chips (hereinafter, it is shown as "B+BINV"). A+A corresponds to code pattern 1, A+AINV corresponds to code pattern 2, B+B corresponds to code pattern 3, and B+BINV corresponds to code pattern 4. Therefore, code patterns 1 to 4 shown in FIG. 4 each have a different two-dimensional spreading code, and each have 8 chips; in addition, it is possible to perform 2 symbols transmission with one of the two-dimensional spreading codes. Moreover, in FIG. 4 (A) to FIG. 4(D), the thick solid line is the symbol portion, thin solid line is the basic code portion, and the dashed line is the chip portion.

Thus, according to the present example, since spreading factor of frequency axis direction and spreading factor of time axis direction use two-dimensional spreading codes with the same spreading factor, all one-symbol ranges are also the same for all transmission data, and the total spreading factor (=SFf × SFt) is also the same, thus, it is possible to obtain the same multiplexing number. For example, in the example of FIG. 4, the total spreading factor is 4, and it is possible to multiplex 4 signals using 4 code patterns 1 to 4.

Next is the case when it is possible to maintain orthogonality between spreading codes and different total spreading factors.

### (Assignment Example 2)

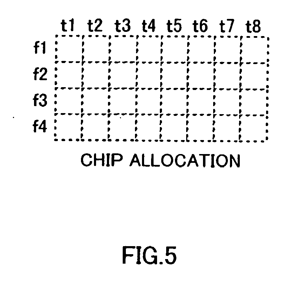

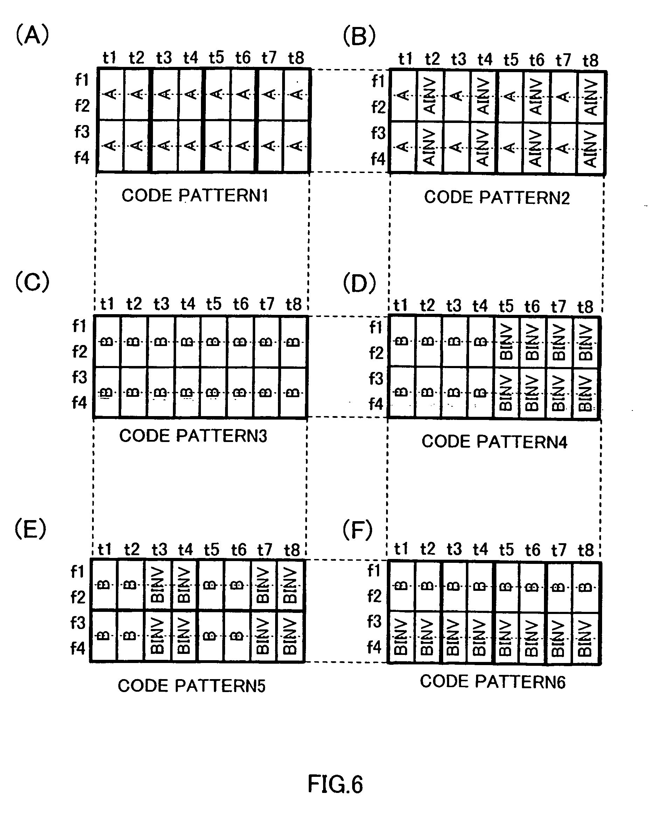

First, assignment example 2 of different total spreading factors is the case of assigning two-dimensional spreading code in which spreading factors of frequency axis direction are the same for all transmission data and spreading factors of time axis direction are different. Here, 6 code patterns 1 to 6 shown in FIG. 6 are formed as a chip allocation diagram shown in FIG. 5 (4 chips in frequency axis, and 8 chips in time axis).

The code patterns 1 to 6 shown in FIG. 6(A) to FIG. 6(F) represent the case where spreading factors of frequency axis directions are common to all (SFf=4), and spreading factors of time axis directions are 2, 4, 8, 8, 4, and 2 (SFt=2, 4, 8, 8, 4, 2), respectively. Here, orthogonal codes A and B of 2 chips which are mutually orthogonal with a spreading code of twice the length of the spreading code corresponding to frequency axis direction are considered as basic codes similar to the case of assignment example 1. Two-dimensional spreading code corresponding to code pattern 1 is SFf=4, SFt=2, and total spreading factor=8, obtained only from basic code A; two-dimensional spreading code corresponding to code pattern 2 is SFf=4, SFt=4, and total spreading factor=16, obtained from basic code A and the inverse of A code AINV, two-dimensional spreading code corresponding to code pattern 3 is SFf=4, SFt=8, and total spreading factor=32, obtained only from basic code B, two-dimensional spreading code corresponding to code pattern 5 is SFf=4, SFt=4, and total spreading factor=16, obtained from basic code B and the inverse of B code BINV, two-dimensional spreading code corresponding to code pattern 6 is SFf=4, SFt=2, and total spreading factor=8, obtained from basic code B and the inverse of B code BINV. Here, in FIG. 6(A) to FIG. 6(F), the thick solid line is the symbol portion, the thin solid line is the basic code portion, and the dashed line is the chip portion. At this time, the symbol portion of the time axis direction in two-dimensional spreading code of which spreading factor of time axis direction is maximum, matches the symbol portions of time axis directions in all other two dimensional spreading code. For example, the symbol portion of time axis direction in code pattern 3 and code pattern 4 matches the symbol portion of time axis direction in other code pattern 1, code pattern 2, code pattern 5, and code pattern 6, where the spreading factor of time axis direction is maximum (SFt=8), as shown in FIG. 6. In OVSF, all code patterns 1 to 6 of two dimensional spreading codes obtained as described above are mutually orthogonal.

Moreover, in such a case, the orthogonal code shown in code patterns 1 to 6 is just a simple illustration, and there are other actual code patterns.

According to the present example, when spreading factors of frequency axis direction are the same for all transmission data and spreading factors of time axis direction are different in only multiple-integer in two-dimensional spreading code, to match the symbol portion of time axis direction of two-dimensional spreading code of which spreading factor ot time axis direction is maximum with the symbol portions of time axis directions of all other two-dimensional spreading code, it is possible to maintain orthogonality of codes using OVSF even when only the spreading factor of time axis direction is different among the spreading factor of frequency axis direction and spreading factor of time axis direction.

### (Assignment Example 3)

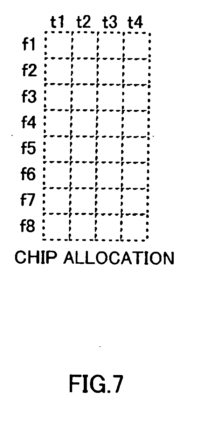

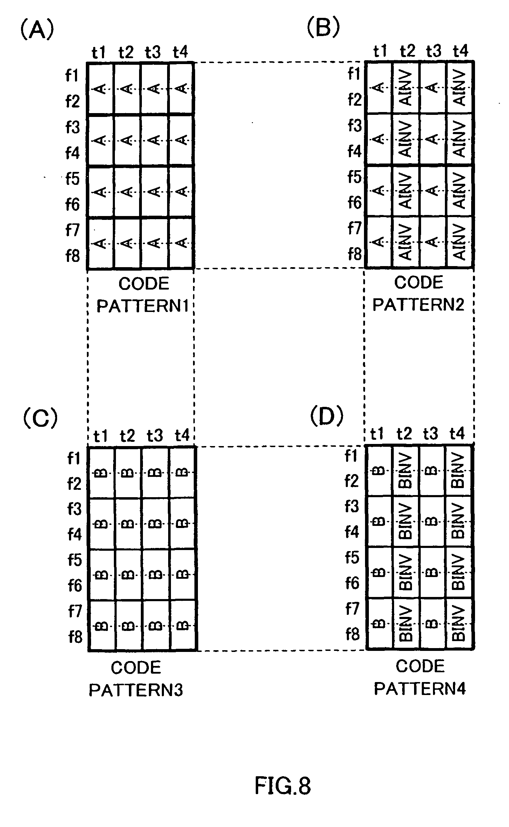

First, assignment example 3 of different total spreading factors is the case of assigning two-dimensional spreading codes in which the spreading factors of time axis direction are similar and spreading factors of frequency axis direction are different. Here, four code patterns 1 to 4 shown in FIG. 8 are formed as a chip allocation diagram shown in FIG. 7 (8 chips in frequency axis, and 4 chips in time axis).

The code patterns 1 to 4 shown in FIG. 8(A) to FIG. 8(D) represent the case where spreading factors of time axis directions are common to all (SFt=4), and spreading factors of frequency axis directions are 2, 4, 8, and 8 (SFf=2, 4, 8, 8), respectively. Here, orthogonal codes A and B of 2 chips which are mutually orthogonal with a spreading code of twice of the spreading code corresponding to frequency axis direction are considered as basic codes similar to the case of assignment example 1. Two-dimensional spreading code corresponding to code pattern 1 is SFf=2, SFt=4, and total spreading factor=8, only obtained from basic code A, two-dimensional spreading code corresponding to code pattern 2 is SFf=4, SFt=4, and total spreading factor=16, obtained from basic code A and the inverse of A code AINV; two-dimensional spreading code corresponding to code pattern 3 is SFf=8, SFt=4, and total spreading factor=32, obtained only from basic code B, two-dimensional spreading code corresponding to code pattern 4 is SFf=8, SFt=4, and total spreading factor=32, obtained from basic code B and the inverse of B code BINV. Moreover, in FIG. 8(A) to FIG. 8(D), the thick solid line is the symbol portion, thin solid line is the basic code portion, and the dashed line is the chip portion. At this time, the symbol portion of frequency axis direction in two-dimensional spreading code of which spreading factor of frequency axis direction is maximum, matches the symbol portions of frequency axis directions in all other two-dimensional spreading code. For example, the symbol portion of frequency axis direction in code pattern 3 and code pattern 4 matches the symbol portion of frequency axis direction in other code pattern 1, and code pattern 2, where the spreading factor of frequency axis direction is maximum (SFf=8), as shown in FIG. 8. In OVSF, all code patterns 1 to 4 of two-dimensional spreading codes obtained as described above are mutually orthogonal.

Moreover, in such a case, the orthogonal code shown in code patterns 1 to 4 is just a simple illustration, and there are other actual code patterns.

According to the present example, when spreading factors of time axis direction are the same for all transmission data and spreading factors of frequency axis direction are different in only multiple-integer, to match the symbol portion of frequency axis direction in two-dimensional spreading code of which spreading factor of frequency axis direction is maximum with the symbol portions of frequency axis directions in all other two-dimensional spreading code, it is possible to maintain orthogonality of codes using OVSF even in the case when only the spreading factor of frequency axis direction is different among spreading factor of frequency axis direction and spreading factor of time axis direction.

### (Assignment Example 4)

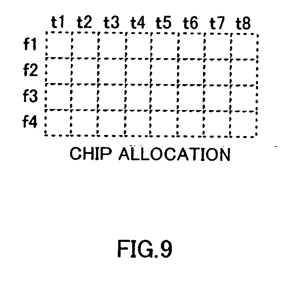

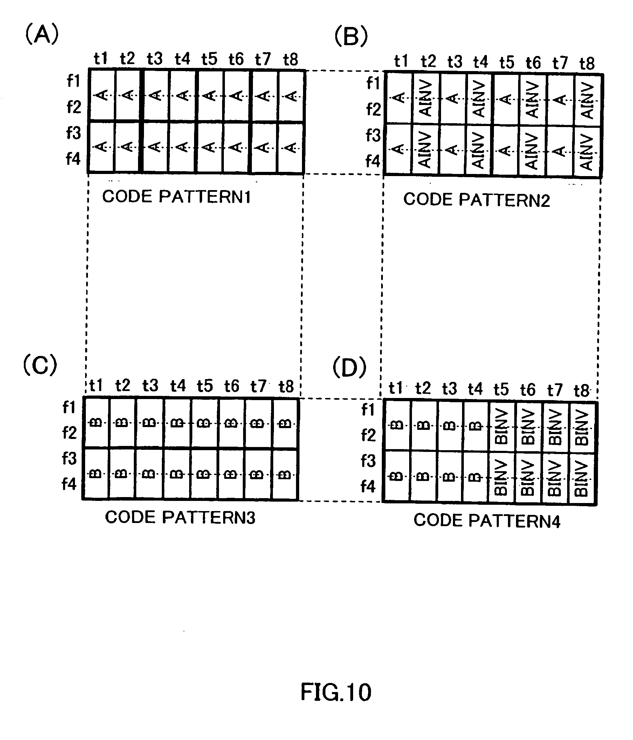

Next, assignment example 4 of different total spreading factor is the case of assigning two-dimensional spreading codes in which the spreading factors of frequency axis direction and spreading factors of time axis direction are different. Here, four code patterns 1 to 4 shown in FIG. 10 are formed as a chip allocation diagram shown in FIG. 9 (4 chips in frequency axis, and 8 chips in time axis).

The code patterns 1 to 4 shown in FIG. 10(A) to FIG. 10(D) represent the case where spreading factors of frequency axis directions are 2, 4, 2, and 4 (SFf=2, 4, 2, 4), and spreading factors of time axis directions are 2, 4, 8, and 8 (SFt=2, 4, 8, 8), respectively. Here, orthogonal codes A and B of 2 chips which are mutually orthogonal to spreading code of twice of spreading code corresponding to frequency axis direction are considered as basic codes similar to the case of assignment example 1. Two-dimensional spreading code corresponding to code pattern 1 is SFf=2, SFt=2, and total spreading factor=4, obtained only from basic code A; two-dimensional spreading code corresponding to code pattern 2 is SFf=4, SFt=4, and total spreading factor=16, obtained from basic code A and the inverse of A code AINV, two-dimensional spreading code corresponding to code pattern 3 is SFf=2, SFt=8, and total spreading factor=16, obtained only from basic code B; two-dimensional spreading code corresponding to code pattern 4 is SFf=4, SFt=8, and total spreading factor=32, obtained from basic code B and the inverse of B code BINV. Moreover, in FIG. 10(A) to FIG. 10(D), the thick solid line is the symbol portion, thin solid line is the basic code portion, and the dashed line is the chip portion. At this time, the symbol portion of frequency axis direction in two-dimensional spreading code of which spreading factor of frequency axis direction is maximum, matches the symbol portions of frequency axis directions in all other two-dimensional spreading code, and the symbol portion of time axis direction in two-dimensional spreading code of which spreading factor of time axis direction is maximum, matches the symbol portions of time axis directions in all other two-dimensional spreading code. For example, the symbol portion of frequency axis direction in code pattern 2 and code pattern 4 matches the symbol portion of frequency axis direction in other code pattern 1 and code pattern 3, where spreading factor of frequency axis direction is maximum (SFf=4), as shown in FIG. 10, and the symbol portion of time axis direction in code pattern 3 and code pattern 4 matches the symbol portion of time axis direction in other code pattern 1 and pattern 2 where spreading factor of time axis direction is maximum (SFt=8), as shown in FIG. 10. In OVSF, each code pattern 1-4 of two-dimensional spreading code performed as described above are mutually orthogonal.

Moreover, in such a case, orthogonal code shown in code patterns 1 to 4 is just a simple illustration, and there are other actual code patterns.

According to the present example, when spreading factors of frequency axis direction are different in only multiple-integer and spreading factors of time axis direction are different in only multiple-integer and different two-dimensional spreading code, the symbol portion of frequency axis direction in two-dimensional spreading code of which spreading factor of frequency axis direction is maximum, matches the symbol portions of frequency axis directions in all other two-dimensional spreading codes, and to match the symbol portion of time axis direction in two-dimensional spreading code of which spreading factor of time axis direction is maximum with the symbol portions of time axis directions in all other two-dimensional spreading code, it is possible to maintain orthogonality of codes using OVSF even when both spreading factors of frequency axis direction and time axis direction are different and when the total spreading factors are different.

### (Assignment Example 5)

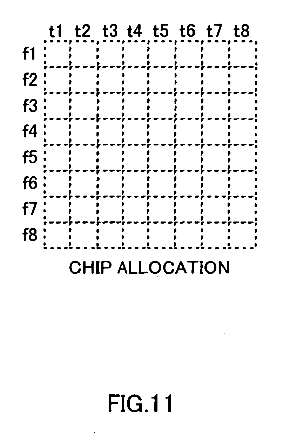

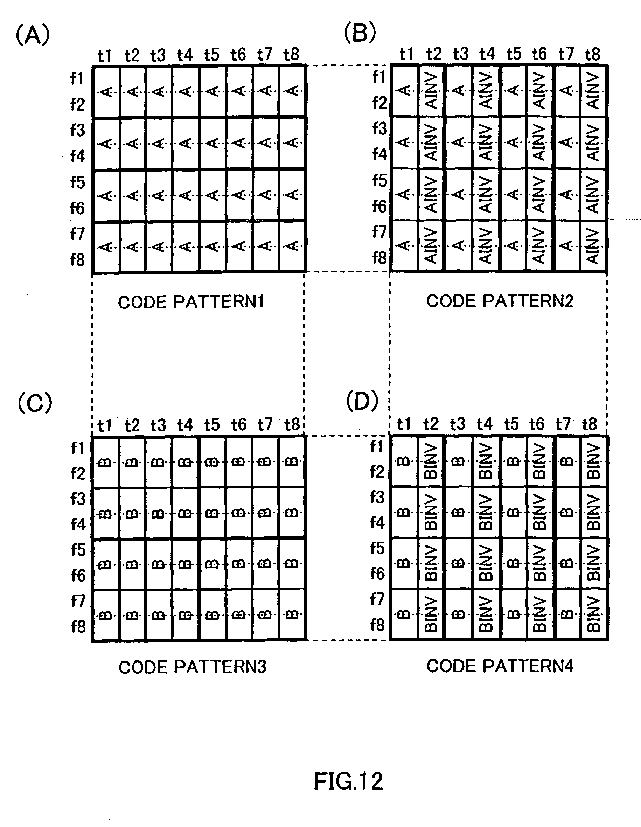

Assignment example 5 of fixed total spreading factors is the case of assigning two-dimensional spreading code in which the spreading factor of frequency axis direction and spreading factor of time axis direction are different. Here, four code patterns 1 to 4 shown in FIG. 12 are formed as a chip allocation diagram shown in FIG. 11 (8 chips in frequency axis, and 8 chips in time axis).

The code patterns 1 to 4 shown in FIG. 12(A) to FIG. 12(D) represent the case where the total spreading factor is fixed and equals 16, spreading factors of frequency axis directions are 2, 8, 4, and 8 (SFf=2, 8, 4, 8), and spreading factors of time axis directions are 8, 2, 4, and 2 (SFt=8, 2, 4, 2), respectively. Here, orthogonal codes A and B of 2 chips which are mutually orthogonal with spreading code of twice of the spreading code corresponding to frequency axis direction are considered as basic codes similar to the case of assignment example 1. Two-dimensional spreading code corresponding to code pattern 1 is SFf=2, SFt=8, and total spreading factor=16, obtained only from basic code A; two-dimensional spreading code corresponding to code pattern 2 is SFf=8, SFt=2, and total spreading factor=16, obtained from basic code A and the inverse of A code AINV; two-dimensional spreading code corresponding to code pattern 3 is SFf=4, SFt=4, and total spreading factor=16, obtained only from basic code B, two-dimensional spreading code corresponding to code pattern 4 is SFf=8, SFt=2, and total spreading factor=16, obtained from basic code B and the inverse of B code BINV. Moreover, in FIG. 12(A) to FIG. 12(D), the thick solid line is the symbol portion, thin solid line is the basic code portion, and the dashed line is the chip portion. At this time, the symbol portion of frequency axis direction in two-dimensional spreading code of which spreading factor of frequency axis direction is maximum, matches the symbol portions of frequency axis directions in all other two-dimensional spreading codes, and the symbol portion of time axis direction in two-dimensional spreading code of which spreading factor of time axis direction is maximum, matches the symbol portions of time axis directions in all other two-dimensional spreading codes. For example, the symbol portion of frequency axis direction in code pattern 2 and code pattern 4 matches the symbol portion of frequency axis direction in other code pattern 1 and pattern 3 where spreading factor of frequency axis direction is maximum (SFf=8), as shown in FIG. 12, and the symbol portion of time axis direction in code pattern 1 matches the symbol portion of time axis direction in other code pattern 2, code pattern 3, and code pattern 4 where the spreading factor of time axis direction is maximum (SFt=8), as shown in FIG. 12. In OVSF, all code patterns 1 to 4 of two-dimensional spreading codes obtained as described above are mutually orthogonal.

Moreover, in such a case, the orthogonal code shown in code patterns 1 to 4 is just a simple illustration, and there are other actual code patterns.

According to the present example, when spreading factors of frequency axis direction are different in only multiple-integer, and spreading factors of time axis direction are different in only multiple-integer as well, the total spreading factor is fixed employed as different in multiple-integer two-dimensional spreading code, the symbol portion of frequency axis direction in two-dimensional spreading code of which spreading factor of frequency axis direction is maximum, matches the symbol portions of frequency axis directions in all other two-dimensional spreading code, and to match the symbol portion of time axis direction in two-dimensional spreading code of which spreading factor of time axis direction is maximum with the symbol portions of time axis directions in all other two dimensional spreading code, it is possible to maintain orthogonality of codes using OVSF even when spreading factor of frequency axis direction and spreading factor of time axis direction are different and when total spreading factors are the same.

Spreading code instruction section 9 selects two-dimensional spreading code obtained from each two-dimensional spreading sections 1-1 to 1-8 according to propagation situation. For example, the spreading factor of frequency axis direction (SFf) selects large two-dimensional spreading code, so that correlation characteristic of frequency axis direction becomes small, as there is a remarkable fear reduced orthogonality of frequency axis direction when there is a long delay wave, on the other hand, the spreading factor of time axis direction (SFt) selects large two-dimensional spreading code, so that correlation characteristic of time axis direction becomes small, as there is a remarkable fear reduced orthogonality of time axis direction under intensive time fluctuation. Even if the transmission rates of symbols are similar in two-dimensional OVSF, as described above, it is possible to freely change the ratio of spreading factor of frequency axis direction and spreading factor of time axis direction with spreading factor of time axis direction and spreading factor of frequency axis direction to maintain orthogonality of codes, it is also possible to freely maintain the ratio between both optimum spreading factor of frequency axis direction and spreading factor of time axis direction and maintaining the transmission rate of symbols of every code (i.e. every user) based on the channel situation and spreading factor of frequency axis direction and time axis direction of every code can be optimized while maintaining orthogonality of the code.

Thus, according to the data transmission apparatus of the present embodiment, it is possible to maintain orthogonality of codes even when spreading factors are different to perform two-dimensional spreading of frequency axis direction and time axis direction by two-dimensional OVSF, and it is also possible to multiplex a plurality of user signals as OFDM-CDMA signal subjected to two-dimensional spreading, therefore, the spreading factor of frequency axis direction and time axis direction can be optimized for every code (user) while maintaining orthogonality of the codes.

In addition, the data transmission apparatus according to the present embodiment, for instance, can be built in both or either of base station apparatus and mobile station apparatus to compose a particular mobile communication system.

In accordance with the aforementioned present invention, it is possible to maintain orthogonality of codes even when spreading factors are different and the two-dimensional spreading of frequency axis direction and time axis direction is carried out, in addition, it is possible to optimize the spreading factor of frequency axis direction and time axis direction of each code while maintaining orthogonality of codes.

The present application claims priority from the Japanese Patent Application No. 2001-232928 filed on Jul. 31, 2001.

## Claims

1. A data transmission apparatus that is adapted to perform transmission of data by combining multicarrier modulation scheme and CDMA scheme, the data transmission apparatus comprising:
a spreading code instruction section (9) that is adapted to select two-dimensional orthogonal spreading codes, each orthogonal code having a variable spreading factor in a frequency axis direction and a variable spreading factor in a time axis direction, wherein said variable spreading factors are selected according to propagation condition; and
a spreading section (1-1.. 1-8) that is adapted to spread transmission data in both the frequency axis direction and the time axis direction simultaneously using the two-dimensional orthogonal spreading codes selected at the spreading code instruction section,
wherein:
said spreading code instruction section (9) comprises:
a first generator (11) that is adapted to generate a first orthogonal spreading code having a variable spreading factor for use in the frequency axis direction; and
a second generator (13) that is adapted to generate a second orthogonal spreading code having a variable spreading factor for use in the time axis direction; and
said spreading code instruction section (9) is adapted to select the two-dimensional orthogonal variable spreading codes so that at leat one of the first spreading code and the second spreading code is different for different transmission data; and
the spreading section (1-1.. 1-8) is adapted to perform the spreading processing in both the frequency axis direction and the time axis direction simultaneously using the first spreading code generated by the first generator (11) and the second spreading code generated by the second generator (13).

2. The data transmission apparatus according to claim 1, wherein:
the two-dimensional orthogonal spreading codes have the same spreading factor in the frequency axis direction and have spreading factors differing in integral multiples in the time axis direction, between a plurality of transmission data; and
a symbol portion in the time axis direction in a two-dimensional orthogonal spreading code having a maximum spreading factor in the time axis direction matches symbol portions in the time axis direction in all other two-dimensional orthogonal spreading codes.

3. The data transmission apparatus according to claim 1 wherein:
the two-dimensional orthogonal variable spreading codes have the same spreading factors in the time axis direction and have spreading factors differing in integral multiples in the frequency axis direction, between a plurality of transmission data; and
a symbol portion in the frequency axis direction in a two-dimensional orthogonal spreading code having a maximum spreading factor in the frequency axis direction matches symbol portions in the frequency axis direction in all other two-dimensional orthogonal spreading codes.

4. The data transmission apparatus according to any of claims 1 wherein:
the two-dimensional orthogonal spreading codes have spreading factors differing in integral multiples in the frequency axis direction and spreading factors differing in integral multiples in the time axis direction, between a plurality of transmission data; and
a symbol portion in the frequency axis direction in a two-dimensional orthogonal spreading code having a maximum spreading factor in the frequency axis direction matches symbol portions in the frequency axis direction in all other two-dimensional orthogonal spreading codes, and a symbol portion in the time axis direction in a two-dimensional orthogonal spreading code having a maximum spreading factor in the time axis direction matches symbol portions in the time axis direction in all other two dimensional orthogonal spreading codes.

5. The data transmission apparatus according to any of claims 1 to 4, wherein:
the two-dimensional orthogonal spreading code has fixed total spreading factor obtained by multiplying spreading factor in the frequency axis direction with spreading factor in the time axis direction; and
a symbol portion of frequency axis direction in a two-dimensional orthogonal spreading code having a maximum spreading factor of frequency axis direction matches symbol portions in the frequency axis direction in all other two-dimensional orthogonal spreading codes, and a symbol portion in the time axis direction in a two-dimensional orthogonal spreading code having a maximum spreading factor in the time axis direction matches symbol portions in the time axis direction in all other two-dimensional orthogonal spreading codes.

6. A data transmission method to perform transmission of data by combining multicarrier modulation scheme and CDMA scheme, the data transmission method comprising:
a selecting step of selecting two-dimensional orthogonal spreading codes, each having a orthogonal code variable spreading factor in a frequency axis direction and a variable spreading factor in a time axis direction, wherein said variable spreading factors are selected according to propagation condition; and
a spreading step of spreading transmission data in both the frequency axis direction and the time axis direction simultaneously using the selected two-dimensional orthogonal spreading codes, wherein:
the selecting step comprises the steps of:
generating a first orthogonal spreading code having a variable spreading factor for use in the frequency axis direction ; and
generating a second orthogonal spreading code having a variable spreading factor for use in the time axis direction
wherein:
in said selecting step, the two-dimensional orthogonal spreading codes are selected so that at least one of the first spreading code and the second spreading code is different for different transmission data; and
in said spreading step, spreading processing on both the frequency axis direction and the time axis direction is performed simultaneously using the first spreading code and the second spreading code.

## Patentansprüche

1. Datensendevorrichtung, die so eingerichtet ist, dass sie Senden von Daten durch Kombinieren eines Mehrfachträger-Modulationsschemas und eines CDMA-Schemas durchführt, wobei die Datensendevorrichtung umfasst:
einen Spreizcode-Anweisungsabschnitt (9), der so eingerichtet ist, dass er zweidimensionale orthogonale Spreizcodes auswählt, wobei jeder orthogonale Code einen variablen Spreizfaktor in Frequenzachsenrichtung und einen variablen Spreizfaktor in einer Zeitachsenrichtung hat und die variablen Spreizfaktoren gemäß einer Ausbreitungsbedingung ausgewählt werden; und
einen Spreizabschnitt (1-1... 1-8), der so eingerichtet ist, dass er Sendedaten sowohl in der Frequenzachsenrichtung als auch der Zeitachsenrichtung gleichzeitig unter Verwendung der zweidimensionalen orthogonalen Spreizcodes spreizt, die an dem Spreizcode-Anweisungsabschnitt ausgewählt werden,
wobei:
der Spreizcode-Anweisungsabschnitt (9) umfasst:
einen ersten Generator (11), der so eingerichtet ist, dass er einen ersten orthogonalen Spreizcode mit einem variablen Spreizfaktor zur Verwendung in der Frequenzachsenrichtung erzeugt; und
einen zweiten Generator (13), der so eingerichtet ist, dass er einen zweiten orthogonalen Spreizcode mit einem variablen Spreizfaktor zur Verwendung in der Zeitachsenrichtung auswählt; und
wobei der Spreizcode-Anweisungsabschnitt (9) so eingerichtet ist, dass er die zweidimensionalen orthogonalen variablen Spreizcodes so auswählt, dass wenigstens der erste Spreizcode oder der zweite Spreizcode für verschiedene Sendedaten verschieden ist; und
der Spreizabschnitt (1-1... 1-8) so eingerichtet ist, dass er die Spreizverarbeitung sowohl in der Frequenzachsenrichtung als auch der Zeitachsenrichtung simultan unter Verwendung des durch den ersten Generator (11) erzeugten ersten Spreizcodes und des durch den zweiten Generator (13) erzeugten zweiten Spreizcodes durchführt.

2. Datensendevorrichtung nach Anspruch 1, wobei:
die zweidimensionalen orthogonalen Spreizcodes den gleichen Spreizfaktor in der Frequenzachsenrichtung haben und in der Zeitachsenrichtung Spreizfaktoren haben, die sich zwischen einer Vielzahl von Sendedaten in ganzzahligen Vielfachen unterscheiden; und
ein Symbolabschnitt in der Zeitachsenrichtung in einem zweidimensionalen orthogonalen Spreizcode, der einen maximalen Spreizfaktor in der Zeitachsenrichtung hat, Symbolabschnitten in der Zeitachsenrichtung in allen anderen zweidimensionalen orthogonalen Spreizcodes entspricht.

3. Datensendevorrichtung nach Anspruch 1, wobei:
die zweidimensionalen orthogonalen variablen Spreizcodes die gleichen Spreizfaktoren in der Zeitachsenrichtung haben und in der Frequenzachsenrichtung Spreizfaktoren haben, die sich zwischen einer Vielzahl von Sendedaten in ganzzahligen Vielfachen unterscheiden; und
ein Symbolabschnitt in der Frequenzachsenrichtung in einem zweidimensionalen orthogonalen Spreizcode, der einen maximalen Spreizfaktor in der Frequenzachsenrichtung hat, Symbolabschnitten in der Frequenzachsenrichtung in allen anderen zweidimensionalen orthogonalen Spreizcodes entspricht.

4. Datensendevorrichtung nach Anspruch 1, wobei:
die zweidimensionalen orthogonalen Spreizcodes in der Frequenzachsenrichtung Spreizfaktoren, die sich zwischen einer Vielzahl von Sendedaten in ganzzahligen Vielfachen unterscheiden, und in der Zeitachsenrichtung Spreizfaktoren haben, die sich in ganzzahligen Vielfachen unterscheiden; und
ein Symbolabschnitt in der Frequenzachsenrichtung in einem zweidimensionalen orthogonalen Spreizcode, der einen maximalen Spreizfaktor in der Frequenzachsenrichtung hat, Symbolabschnitten in der Frequenzachsenrichtung in allen anderen zweidimensionalen orthogonalen Spreizcodes entspricht, und ein Symbolabschnitt in der Zeitachsenrichtung in einem zweidimensionalen orthogonalen Spreizcode, der einen maximalen Spreizfaktor in der Zeitachsenrichtung hat, Symbolabschnitten in der Zeitachsenrichtung in allen anderen zweidimensionalen orthogonalen Spreizcodes entspricht.

5. Datensendevorrichtung nach einem der Ansprüche 1 bis 4, wobei:
der zweidimensionale orthogonale Spreizcode einen unveränderlichen Gesamt-Spreizfaktor hat, der ermittelt wird, indem der Spreizfaktor in der Frequenzachsenrichtung mit dem Spreizfaktor in der Zeitachsenrichtung multipliziert wird; und
ein Symbolabschnitt in Frequenzachsenrichtung in einem zweidimensionalen orthogonalen Spreizcode, der einen maximalen Spreizfaktor in Frequenzachsenrichtung hat, Symbolabschnitten in der Frequenzachsenrichtung in allen anderen zweidimensionalen orthogonalen Spreizcodes entspricht, und ein Symbolabschnitt in der Zeitachsenrichtung in einem zweidimensionalen orthogonalen Spreizcode, der einen maximalen Spreizfaktor in der Zeitachsenrichtung hat, Symbolabschnitten in der Zeitachsenrichtung in allen anderen zweidimensionalen orthogonalen Spreizcodes entspricht.

6. Datensendeverfahren zum Durchführen von Senden von Daten durch Kombinieren eines Mehrfachträger-Modulationsschemas und eines CDMA-Schemas, wobei das Datensendeverfahren umfasst:
einen Auswählschritt des Auswählens zweidimensionaler orthogonaler Spreizcodes, wobei jeder orthogonale Code einen variablen Spreizfaktor in einer Frequenzachsenrichtung und einen variablen Spreizfaktor in einer Zeitachsenrichtung hat und die variablen Spreizfaktoren gemäß einer Ausbreitungsbedingung ausgewählt werden; und
einen Spreizschritt des gleichzeitigen Spreizens von Sendedaten sowohl in der Frequenzachsenrichtung als auch der Zeitachsenrichtung unter Verwendung der ausgewählten zweidimensionalen Spreizcodes, wobei:
der Auswählschritt die folgenden Schritte umfasst:
Erzeugen eines ersten orthogonalen Spreizcodes mit einem variablen Spreizfaktor zur Verwendung in der Frequenzachsenrichtung; und
Erzeugen eines zweiten orthogonalen Spreizcodes (3) zur Verwendung in der Zeitachsenrichtung,
wobei:
in dem Auswählschritt die zweidimensionalen orthogonalen Spreizcodes so ausgewählt werden, dass wenigstens der erste Spreizcode oder der zweite Spreizcode für verschiedene Sendedaten verschieden ist; und
in dem Spreizschritt Spreizverarbeitung sowohl in der Frequenzachsenrichtung als auch der Zeitachsenrichtung simultan unter Verwendung des ersten Spreizcodes und des zweiten Spreizcodes durchgeführt wird.

## Revendications

1. Dispositif de transmission de données qui est adapté pour exécuter une transmission de données en combinant un schéma de modulation multiporteuse et un schéma CDMA, le dispositif de transmission de données comprenant :
une section d'instruction de code d'étalement (9) qui est adaptée pour sélectionner des codes d'étalement orthogonaux bidimensionnels, chaque code orthogonal possédant un facteur d'étalement variable dans une direction de l'axe des fréquences et un facteur d'étalement variable dans une direction de l'axe des temps, dans laquelle lesdits facteurs d'étalement variables sont sélectionnés en fonction d'une condition de propagation; et
une section d'étalement (1-1 ... 1-8) qui est adaptée pour étaler des données de transmission dans à la fois la direction de l'axe des fréquences et la direction de l'axe des temps simultanément en utilisant les codes d'étalement orthogonaux bidimensionnels sélectionnés au niveau de la section d'instruction de code d'étalement,
dans lequel :
ladite section d'instruction de code d'étalement (9) comprend :
un premier générateur (11) qui est adapté pour générer un premier code d'étalement orthogonal possédant un facteur d'étalement variable à utiliser dans la direction de l'axe des fréquences ; et
un second générateur (13) qui est adapté pour générer un second code d'étalement orthogonal possédant un facteur d'étalement variable à utiliser dans la direction de l'axe des temps ; et
ladite section d'instruction de code d'étalement (9) est adaptée pour sélectionner les codes d'étalement variables orthogonaux bidimensionnels de sorte qu'au moins l'un du premier code d'étalement et du second code d'étalement soit différent pour différentes données de transmission ; et
la section d'étalement (1-1 ... 1-8) est adaptée pour exécuter l'opération d'étalement dans à la fois la direction de l'axe des fréquences et la direction de l'axe des temps simultanément en utilisant le premier code d'étalement généré par le premier générateur (11) et le second code d'étalement généré par le second générateur (13).

2. Dispositif de transmission de données selon la revendication 1, dans lequel :
les codes d'étalement orthogonaux bidimensionnels possèdent le même facteur d'étalement dans la direction de l'axe des fréquences et possèdent des facteurs d'étalement qui diffèrent en multiples intégrales dans la direction de l'axe des temps, entre une pluralité de données de transmission ; et
une partie de symbole dans la direction de l'axe des temps dans un code d'étalement orthogonal bidimensionnel possédant un facteur d'étalement maximum dans la direction de l'axe des temps correspond à des parties de symboles dans la direction de l'axe des temps dans tous les autres codes d'étalement orthogonaux bidimensionnels.

3. Dispositif de transmission de données selon la revendication 1, dans lequel :
les codes d'étalement variables orthogonaux bidimensionnels possèdent les mêmes facteurs d'étalement dans la direction de l'axe des temps et possède des facteurs d'étalement qui diffèrent en multiples intégrales dans la direction de l'axe des fréquences, entre une pluralité de données de transmission ; et
une partie de symbole dans la direction de l'axe des fréquences dans un code d'étalement orthogonal bidimensionnel possédant un facteur d'étalement maximum dans la direction de l'axe des fréquences correspond à des parties de symboles dans la direction de l'axe des fréquences dans tous les autres codes d'étalement orthogonaux bidimensionnels.

4. Dispositif de transmission de données selon la revendication 1, dans lequel :
les codes d'étalement orthogonaux bidimensionnels possèdent des facteurs d'étalement qui diffèrent en multiples intégrales dans la direction de l'axe des fréquences et des facteurs d'étalement qui diffèrent en multiples intégrales dans la direction de l'axe des temps, entre une pluralité de données de transmission ; et
une partie de symbole dans la direction de l'axe des fréquences dans un code d'étalement orthogonal bidimensionnel possédant un facteur d'étalement maximum dans la direction de l'axe des fréquences correspond à des parties de symboles dans la direction de l'axe des fréquences dans tous les autres codes d'étalement orthogonaux bidimensionnels, et une partie de symbole dans la direction de l'axe des temps dans un code d'étalement orthogonal bidimensionnel possédant un facteur d'étalement maximum dans la direction de l'axe des temps correspond à des parties de symboles dans la direction de l'axe des temps dans tous les autres codes d'étalement orthogonaux bidimensionnels.

5. Dispositif de transmission de données selon l'une quelconque des revendications 1 à 4, dans lequel :
le code d'étalement orthogonal bidimensionnel possède un facteur d'étalement total fixe obtenu en multipliant le facteur d'étalement dans la direction de l'axe des fréquences au facteur d'étalement dans la direction de l'axe des temps ; et
une partie de symbole de la direction de l'axe des fréquences dans un code d'étalement orthogonal bidimensionnel possédant un facteur d'étalement maximum de la direction de l'axe des fréquences correspond à des parties de symboles dans la direction de l'axe des fréquences dans tous les autres codes d'étalement orthogonaux bidimensionnels, et une partie de symbole dans la direction de l'axe des temps dans un code d'étalement orthogonal bidimensionnel possédant un facteur d'étalement maximum dans la direction de l'axe des temps correspond à des parties de symboles dans la direction de l'axe des temps dans tous les autres codes d'étalement orthogonaux bidimensionnels.

6. Procédé de transmission de données pour exécuter une transmission de données en combinant un schéma de modulation multiporteuse et un schéma CDMA, le procédé de transmission de données comprenant :
une étape de sélection consistant à sélectionner des codes d'étalement orthogonaux bidimensionnels, chaque code orthogonal possédant un facteur d'étalement variable dans une direction de l'axe des fréquences et un facteur d'étalement variable dans une direction de l'axe des temps, dans laquelle lesdits facteurs d'étalement variables sont sélectionnés en fonction d'une condition de propagation ; et
une étape d'étalement consistant à étaler des données de transmission dans à la fois la direction de l'axe des fréquences et la direction de l'axe des temps simultanément en utilisant les codes d'étalement orthogonaux bidimensionnels sélectionnés, dans lequel :
l'étape de sélection comprend les étapes consistant à :
générer un premier code d'étalement orthogonal possédant un facteur d'étalement variable à utiliser dans la direction de l'axe des fréquences ; et
générer un second code d'étalement orthogonal possédant un facteur d'étalement variable à utiliser dans la direction de l'axe des temps,
dans lequel :
dans ladite étape de sélection, les codes d'étalement orthogonaux bidimensionnels sont sélectionnés de sorte qu'au moins l'un du premier code d'étalement et du second code d'étalement soit différent pour différentes données de transmission ; et
dans ladite étape d'étalement, l'opération d'étalement dans à la fois la direction de l'axe des fréquences et la direction de l'axe des temps est exécutée simultanément en utilisant le premier code d'étalement et le second code d'étalement.
